# EUROPEAN PATENT SPECIFICATION

(11) **EP 2 240 998 B1**
(45) Date of publication and mention of the grant of the patent: **26.12.2018**
(21) Application number: 09701183.7
(22) Date of filing: 12.01.2009
(51) Int. Cl.: H02K 49/10

(54) **DRIVES FOR SEALED SYSTEMS**
ANTRIEBE FÜR DICHTUNGSSYSTEME
TRANSMISSIONS POUR SYSTÈMES FERMÉS HERMÉTIQUEMENT

(30) Priority: 11.01.2008 GB 0800462
(43) Date of publication of application: 20.10.2010
(73) Proprietor: Magnomatics Limited, Sheffield S2 5BQ (GB)
(72) Inventor: ATALLAH, Kais, Sheffield S6 3GB (GB); RENS, Jan, Jozef, Sheffield S1 4BU (GB)
(74) Representative: Howson, Richard Giles Bentham
(86) International application number: PCT/GB2009/000080
(87) International publication number: WO 2009/087409

(56) References cited:
- EP-A- 1 353 436
- EP-A- 1 578 009
- DE-A1- 4 405 701
- GB-A- 675 379
- GB-A- 2 439 111
- US-A- 2 460 015
- US-A- 3 378 710

## Description

### Field of the Invention

The present invention relates to sealed systems such as pumps and turbines, and in particular to drive systems for such systems.

### Background to the invention

Pumps and turbines are used in a wide variety of applications and are connected to a source of rotational or linear power, such as motors, actuators or complementary pumps or turbines in a number of different ways. In some pumps the source of power operates at a different speed from the driven mechanism. Also, it is often required that the fluid in which the pump or other mechanism is immersed must be prevented from contaminating the rest of the drive system. Therefore, a pump or turbine may comprise a hermetic seal between the source of rotational or linear power and the pump, turbine or other mechanism and some form of gearing between the drive system and the driven mechanism.

DE 44 05 701 A1 discloses a magnetic gearbox which comprises three concentric magnetic members. The inner one carries a drive shaft, the outer one carries the output shaft and the middle one is fixed. The inner and outer members carry permanent magnets whose fields are influenced by the soft-magnetic middle member. To this end, the middle member has an equi-spaced set of teeth. The magnets are aligned radially in an alternating pole sequence around the whole periphery. The number of teeth on the middle member lies between the pole numbers for inner and outer members. A modified design has a set of teeth on the inner surface of the outer member, facing the teeth of the fixed middle member.

EP-A-1 578 009 discloses an axial-type or radial-type magnetic rotation transmitting device, which includes a driving rotation body having one or plural magnetic line(s) in which plural first permanent magnets are disposed in a circumferential direction on a first disk or cylinder at almost equal intervals, a drive source rotationally driving a drive shaft of the driving rotation body, and a driven rotation body having one or plural magnet line(s) in which second permanent magnets of the same number as the first magnets are disposed in the circumferential direction on a second disk or column at almost equal intervals, symmetrically disposed to, and magnetically coupled with the driving rotation body with a magnetic coupling gap and, which utilizes a magnetic operation and which allows the driven rotation body to rotate by rotationally driving the drive shaft by means of the drive source.

US 3,378,710 discloses a magnetic drive similar to a planetary gear mechanical drive. Three elements having a common axis of revolution are provided, namely - an outer ring magnet, an intermediate planet ring having a plurality of substantially radial magnetically permeable bars, and a sun magnet. One of the elements is power-driven and a second element is then driven. The drive may be used to achieve a speed increase or decrease.

### Summary of invention

The present invention provides a magnetically geared system according to claim 1.

Optional features of the magnetically geared system are defined in the dependent claims.

Preferred embodiments of the present invention will now be described by way of example only with reference to the accompanying drawings.

### Brief description of the drawings

**Figure 1** is a schematic section through a rotary magnetic gearing system used in the present invention;
**Figure 2** is a graph illustrating magnetic spatial harmonics associated with the assembly of Figure 1;
**Figure 3** is a longitudinal section through a pump according to an embodiment of the invention;
**Figure 4** is a longitudinal section through a pump according to a second embodiment of the invention;
**Figure 5** is a longitudinal section through a pump according to a third embodiment of the invention
**Figure 6** is a section through a linear drive system according to a further embodiment of the invention;
**Figure 7** is a section through a flywheel according to a further embodiment of the invention; and
**Figure 8** is a section through a flywheel according to a further embodiment of the invention.

### Description of the Preferred Embodiments

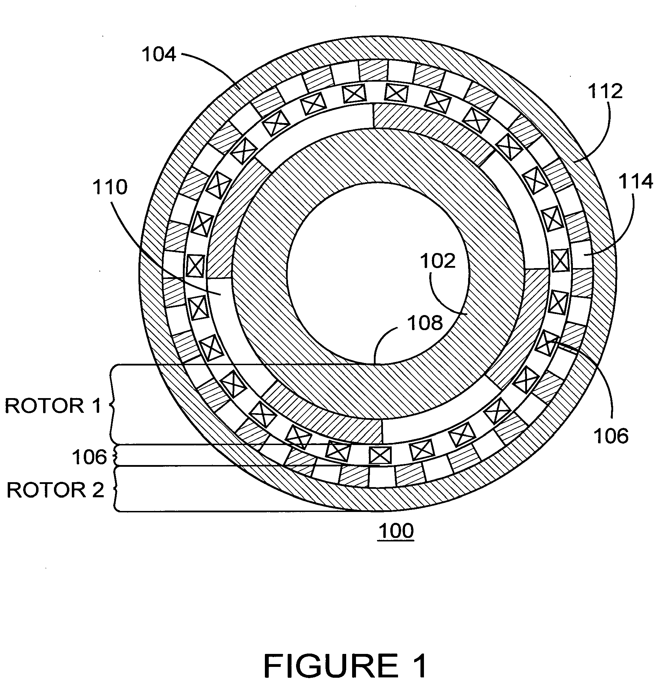

Referring to Figure 1, a rotary magnetic gear 100 comprises a first or inner rotor 102, a second or outer rotor 104 having a common axis of rotation with the first rotor 102, and a number of pole pieces 106 of ferromagnetic material. The first rotor 102 comprises a support 108 carrying a first set of permanent magnets 110, arranged to produce a spatially varying magnetic field with a number of magnetic poles. In this embodiment, the first rotor 102 comprises eight permanent magnets, or four pole-pairs, arranged to produce a spatially varying magnetic field. The second rotor 104 comprises a support 112 carrying a second set of permanent magnets 114, arranged to produce a spatially varying magnetic field with a different number of poles than is produced by the first set of magnets 110. The second rotor 104 comprises 46 permanent magnets or 23 pole-pairs arranged to produce a spatially varying field. The first and second sets of permanent magnets include different numbers of magnets providing different numbers of magnetic poles. Accordingly, without any modulation of the magnetic fields they produce, there would be little or no useful magnetic coupling or interaction between the permanent magnets 112 and 114 such that rotation of one rotor would not cause rotation of the other rotor.

The ferromagnetic pole pieces 106 are used to control the way in which the fields of the permanent magnets 110 and 114 interact. The pole pieces 106 modulate the magnetic fields of the permanent magnets 110 and 114 so that they interact to the extent that rotation of one rotor will induce rotation of the other rotor in a geared manner. The number of pole pieces is chosen to be equal to the sum of the number of pole-pairs of the two sets of permanent magnets. Rotation of the first rotor 102 at a speed ω₁ will induce rotation of the second rotor 104 at a speed ω₂ where ω₁ > ω₂. The ratio between the speeds of rotation ω₁ and ω₂, i.e. the gearing ratio of the coupling, is equal to the ratio between the angular spacing of the magnets on the first and second rotors, and therefore in this case also equal to the ratio between the numbers of magnets 110 and 114 on the first and second rotors 102, 104. The gear can operate in reverse, so that rotation of the second rotor 104 causes rotation of the first rotor at a higher speed.

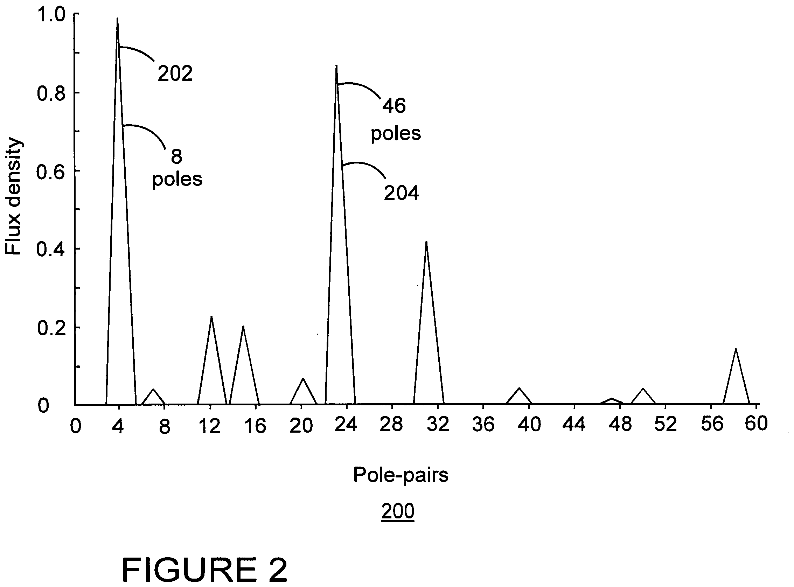

Figure 2 shows a harmonic spectrum 200 of the spatial distribution of the magnetic flux density of the first set of permanent magnets 110 mounted on the inner rotor 102 of the magnetic gear 100 of Figure 1, in the airgap adjacent to the second set of permanent magnets 114 mounted on the outer rotor 104. It can be appreciated that the spectrum 200 comprises a first or fundamental component 202 associated with the first set of permanent magnets 110 of the first rotor 102. This is the component of the field of which the spatial frequency corresponds to the spatial frequency of the polarity of the magnets 110 and therefore corresponds to four pole-pairs. The pole pieces 106 modulate the magnetic field of the permanent magnets 110 to provide components of the magnetic field of different spatial frequencies corresponding to different numbers of pole pairs. For the permanent magnets 110, for example, this results in a relatively large asynchronous harmonic 204 having a number of pole pairs which is equal to the difference between the number of pole pieces 106 and the number of pole pairs of the magnets 110 on the inner rotor. This is arranged, by appropriate selection of the number of pole pieces 106, to be the same as the number of pole pairs of the permanent magnets 114 on the outer rotor 104, which enables coupling between the first 102 and the second 104 rotors. Also, with the pole pieces 106 held stationary and the inner rotor 102 rotated, this component of the field rotates at a lower speed than the inner rotor such that movement of one induces movement of the other, in a geared manner.

One skilled in the art understands how to select and design the pole pieces 106, given the first 110 and second 114 permanent magnets, to achieve the necessary magnetic circuit or coupling such that gearing between the first 102 and second 104 rotors results, as can be appreciated from, for example, K. Atallah, D. Howe, "A novel high-performance magnetic gear", IEEE Transactions on Magnetics, Vol. 37, No. 4, pp. 2844-2846, 2001 and K. Atallah, S. D. Calverley, D. Howe, "Design, analysis and realisation of a high performance magnetic gear", IEE Proceedings -Electric Power Applications, Vol. 151, pp. 135-143, 2004.

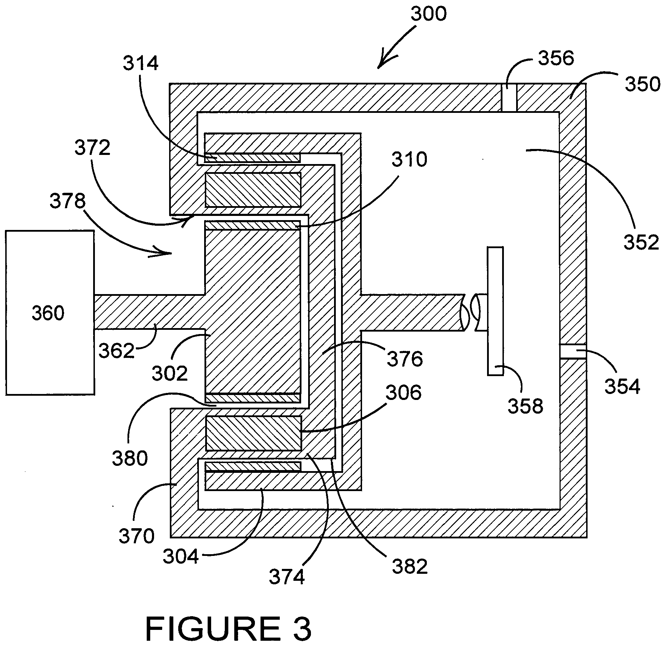

Referring' to Figure 3, a pump 300 comprises a housing 350 defining a fluid chamber 352 having an inlet 354 and an outlet 356. The physical design of the pump is not relevant for the present invention, but in this embodiment the pump has an impellor 358, rotation of which causes fluid to flow from the inlet 354 to the outlet 356. The impellor 358 is driven by a drive system 360 through a magnetic gear which corresponds to that of Figure 1, with corresponding parts indicated by the same reference numerals increased by 200. The magnetic gear includes an input rotor 302, which is driven by the drive system 360 via a drive shaft 362, and an output rotor 304 which is directly mechanically coupled to the impellor 358.

One wall 370 of the housing 350, which forms one wall of the fluid chamber 352, includes an inwardly projecting portion 372 including a cylindrical portion 374 and an inner end wall 376. The cylindrical portion 374 therefore surrounds an outward facing recess 378, in which the input rotor 302 is located. The output rotor 304 extends around the cylindrical portion, being radially outside it, but within the fluid chamber 352. The pole pieces 306 of the drive system are embedded within the cylindrical wall portion 374, which extends between the input and output rotors 302, 304. Therefore the pole pieces 306 are below both the inner and outer surfaces 380, 382 of the cylindrical wall portion 374, being completely enclosed within the material of the cylindrical wall portion 374. This part of the housing is moulded, with the pole pieces being moulded into the wall. This means that the outer surface 382 of the cylindrical wall portion 374 is smooth. As the permanent magnets 314, which are on the radially inner side of the output rotor 304, are only spaced from the cylindrical wall portion 374 by a small distance, it is advantageous to have the surface of the cylindrical wall portion 374 smooth as this reduces losses due to turbulence in the fluid in the gap between the output rotor 304 and the cylindrical wall portion 374. The same is true for the radially inner surface 380 which needs to be smooth to reduce losses from air turbulence around the high speed rotor 302.

It will be appreciated that in operation the magnetic gear provides a geared drive between the drive system 360 and the pump without the need for any mechanical coupling between the inside and the outside of the fluid chamber 352. The drive to the pump is provided purely via the coupling of the magnetic fields of the rotors through the wall 370 of the fluid chamber. The embedding of the pole pieces 306 within the wall 370 allows the close proximity of the permanent magnets 310, 314 of the rotors to the pole pieces 306 to be maintained, thereby maintaining an efficient coupling.

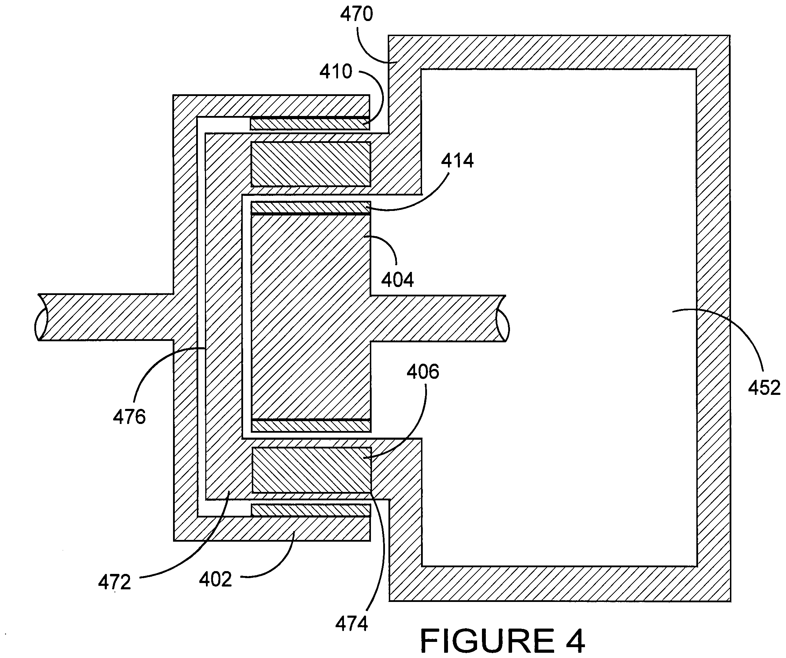

Referring to Figure 4, a second embodiment operates in a similar manner to the first embodiment with corresponding parts being indicated by corresponding reference numerals increased by 100. In this embodiment, the end wall 470 includes an outwardly projecting portion 472 including a cylindrical portion 474 and an outer end wall 476. The input rotor 402 of the geared drive coupling is therefore arranged radially outside the cylindrical wall portion 474 and the output rotor 404 is arranged radially inside the cylindrical wall portion, and therefore also radially inside the input rotor 402. The input rotor 402 again has fewer permanent magnets 410 than the output rotor 404, and its magnets are at a greater spacing, in this case the input rotor has four pole pairs, the output rotor permanent magnets 414 include 23 pole pairs, and there are 27 pole pieces 406 embedded in the cylindrical wall section 474. It will be appreciated that in this arrangement, operation is similar to the first embodiment, and the output rotor 404 will rotate more slowly than the input rotor 402, the gear ratio being determined by the ratio of the numbers of permanent magnets on the rotors 402, 404 in the same way as in the first embodiment.

This embodiment has the advantage that the smaller diameter rotor 404 is the output rotor, which is the rotor inside the fluid chamber. This results in a simpler construction of the housing 450, but more significantly, much less drag on the output rotor, which reduces the losses within the drive coupling and makes it more efficient. It will be appreciated that this arrangement, with the inner rotor being the low speed rotor and the outer rotor being the high speed rotor, which is not achievable with a mechanical drive coupling, can be used in other applications apart from pumps.

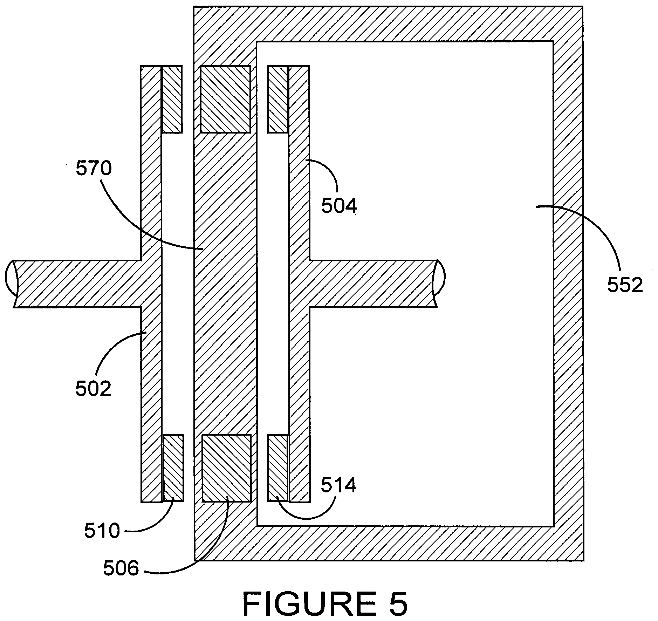

Referring to Figure 5 in the third embodiment of the invention, the drive coupling is axially orientated. The input rotor 502 has a circular array of magnets 510 with their poles at their axial ends, again with alternating polarity around the array. The end wall 570 of the fluid chamber 552 between the rotors is flat, and has a circular array of pole pieces 506 embedded within it. The low speed, output rotor 504 has a circular array of magnets 514, arranged on the opposite side of the end wall 570 to the magnets 510 on the input rotor 502, again with their poles at their axial ends and with alternating polarity around the rotor 504. It will be appreciated that this embodiment will operate in substantially the same way as the first and second embodiments, with the gearing ratio determined by the ratio of the numbers of magnets 510, 514 on the input and output rotors 502, 504, and the number of pole pieces being selected as required.

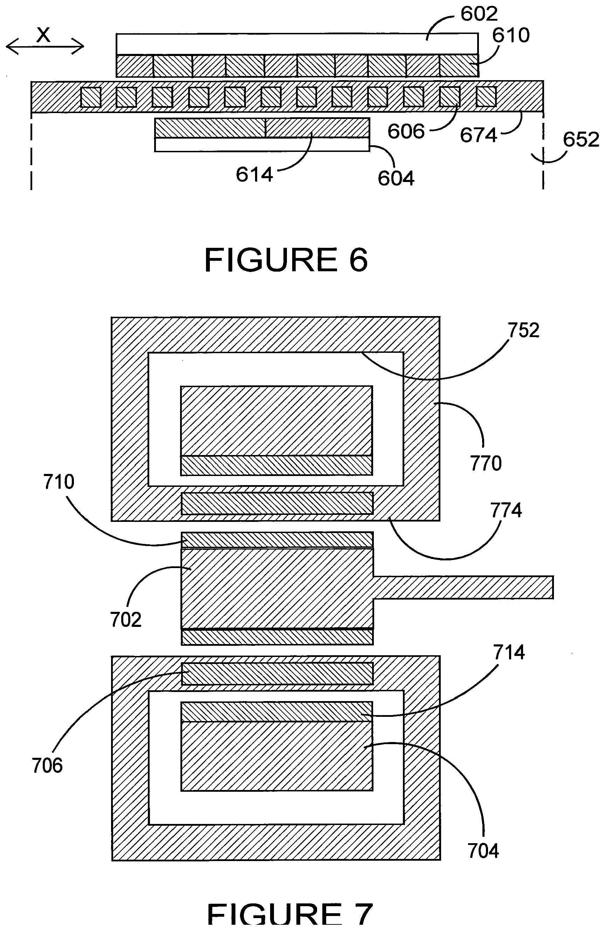

Referring to Figure 6, in a further embodiment of the invention, the drive system is linear, and the magnetic gear comprises an input member 602 or translator arranged to move linearly in either direction along an axis X, an output member 604 or translator also arranged to move linearly in either direction along the same axis, and a wall 674 which encloses a fluid chamber 652 in which the output member 604 is located. In this embodiment the input member 602, output member 604 and wall 674 are annular, with Figure 6 showing a section through one side of the gear system. In other embodiments the input and output members and the wall between them are flat and planar.

The gear system of Figure 6 is the linear equivalent of the gear system of Figure 3, with movement of the input member 602 producing movement of the output member 604 at a lower speed, the ratio of the speeds depending on the linear spacing of the two sets of magnets 610, 614 and the pole pieces 606.

The linear gear system of Figure 6 can be used in a number of applications, for example for controlling robots inside hermetically sealed enclosures.

Referring to Figure 7, in a further embodiment of the invention the magnetic gearing system is used to drive a flywheel which forms one of the rotary members 704. The other of the rotary members 702 is used to input energy to the flywheel and also to extract energy from it. The flywheel is supported on a very low friction bearing system, and the fluid chamber is annular so that the flywheel 704 is entirely enclosed within it. The fluid chamber 752 is in this case a vacuum chamber, being evacuated to a very low pressure so as to minimise the energy loss from the flywheel. The chamber 752 is therefore sealed so as to be airtight. The gearing is arranged such that the input member 702 is the low speed rotor and the flywheel 704 is the high speed rotor. Suitable gearing ratios would be of the order of 10 to 1 up to 30 to 1.

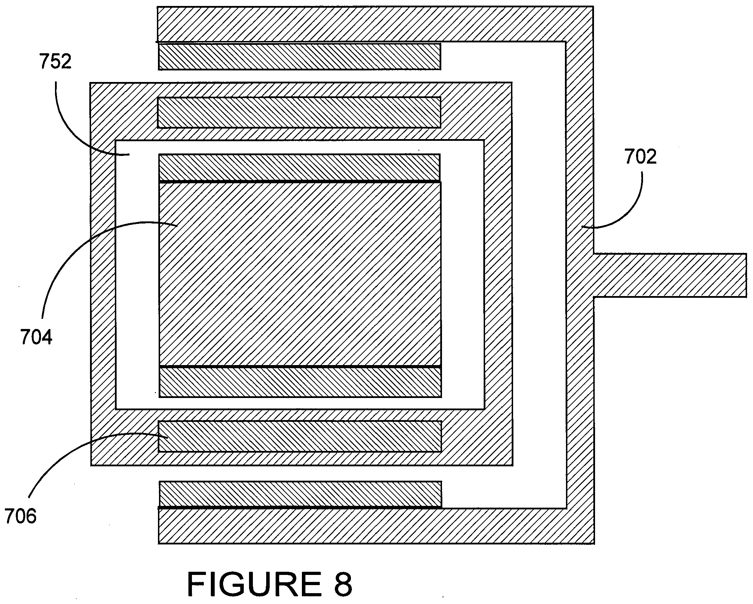

Referring to Figure 8, where like parts to that described in Figure 7 are provided with identical reference numerals, the rotary member 702 is an outer rotor and arranged as the low speed, high pole piece number rotor. In this way the magnetic gearing system is inverted compared to that described in relation to Figure 7.

While in each of the embodiments described above, each of the permanent magnets is a simple dipole with one north and one south pole, it will be appreciated that, while the positioning of the magnetic poles is critical to the operation of each embodiment, any arrangement of pole pairs can be provided by a number of different arrangements of magnets, i.e. blocks of magnetized material. For example more than one pole pair can be provided by a single magnetized block.

## Claims

1. A magnetically geared system comprising a housing (350, 450) defining a sealed chamber (352), a driving member (302, 402) including a first set of permanent magnets (410), and a driven member (304, 404) comprising a second set of permanent magnets (314, 414), one of the members (302, 304, 402, 404) being located inside the chamber (352), wherein the first (410) and second (314, 414) sets of magnets are arranged to produce different numbers of magnetic poles, and the housing (350, 450) includes a wall (370, 470) extending between the members (302, 304, 402, 404) and supporting a plurality of pole pieces (306, 406) which are arranged to modulate the magnetic field acting between the magnets, **characterized in that** the pole pieces (306, 406) are located below the surface of the wall facing away from the chamber (380) and below the surface of the wall facing the chamber (382) such that the pole-pieces are both sealed from the chamber (352) and embedded in the wall (370, 470).

2. A system according to claim 1 wherein the driven member (304, 404) is located within the chamber (352).

3. A system according to claim 1 or claim 2 wherein the spacing of the magnetic poles of the first set of magnets (410) is greater than the spacing of the magnetic poles of the second set (314, 414) such that the driven member (304, 404) is driven at a slower speed than the driving member (302, 402).

4. A system according to claim 1 or claim 2 wherein the spacing of the magnetic poles of the first set of magnets (410) is less than the spacing of the magnetic poles of the second set (314, 414) such that the driven member (304, 404) is driven at a higher speed than the driving member (302, 402).

5. A system according to any foregoing claim wherein the members (302, 304, 402, 404) are rotors.

6. A system according to claim 5 wherein the wall (370, 470) is cylindrical in form and one of the rotors is arranged radially inside the wall (370, 470) and the other of the rotors is arranged radially outside the wall (370, 470).

7. A system according to claim 5, wherein the wall (570) is flat in form and the rotors are arranged in an axial arrangement on either side of the wall (570).

8. A system according to claim 5 or claim 6 wherein one of the rotors forms a flywheel (704).

9. A system according to claim 8 wherein the flywheel (704) is arranged to be driven by the other member to input energy to the flywheel (704), and to drive the other member to extract energy from the flywheel (704).

10. A system according to any of claims 1 to 4 wherein the drive member (602) is arranged to drive the driven member (604) linearly.

## Patentansprüche

1. Magnetisch verzahntes System, umfassend ein Gehäuse (350, 450), das eine gedichtete Kammer (352) definiert, ein Antriebselement (302, 402), das einen ersten Satz Permanentmagnete (410) einschließt, und ein angetriebenes Element (304, 404), umfassend einen zweiten Satz von Permanentmagneten (314, 414), wobei sich eines der Elemente (302, 304, 402, 404) innerhalb der Kammer (352) befindet, wobei der erste (410) und zweite (314, 414) Satz von Magneten angeordnet sind, um unterschiedliche Anzahlen von Magnetpolen zu produzieren, und das Gehäuse (350, 450) eine Wand (370, 470) einschließt, die sich zwischen den Elementen (302, 304, 402, 404) erstreckt und eine Vielzahl von Polstücken (306, 406) trägt, die so angeordnet sind, dass sie das magnetische Feld modulieren, welches zwischen den Magneten wirkt, **dadurch gekennzeichnet, dass**
die Polstücke (306, 406) sich unter der Oberfläche der Wand, die von der Kammer (380) weg weist, und unter der Oberfläche der Wand befinden, die zu der Kammer (382) weist, so dass die Polstücke sowohl bezüglich der Kammer (352) gedichtet als auch in die Wand (370, 470) eingebettet sind.

2. System nach Anspruch 1, wobei das angetriebene Element (304, 404) sich innerhalb der Kammer (352) befindet.

3. System nach Anspruch 1 oder Anspruch 2, wobei der Abstand der Magnetpole des ersten Satzes von Magneten (410) größer als der Abstand der Magnetpole des zweiten Satzes (314, 414) ist, so dass das angetriebene Element (304, 404) mit einer langsameren Drehzahl als das Antriebselement (302, 402) angetrieben wird.

4. System nach Anspruch 1 oder Anspruch 2, wobei der Abstand der Magnetpole des ersten Satzes von Magneten (410) kleiner als der Abstand der Magnetpole des zweiten Satzes (314, 414) ist, so dass das angetriebene Element (304, 404) mit einer höheren Drehzahl als das Antriebselement (302, 402) angetrieben wird.

5. System nach einem der vorhergehenden Ansprüche, wobei die Elemente (302, 304, 402, 404) Rotoren sind.

6. System nach Anspruch 5, wobei die Wand (370, 470) von zylindrischer Form ist und einer der Rotoren radial innerhalb der Wand (370, 470) angeordnet ist und der andere der Rotoren radial außerhalb der Wand (370, 470) angeordnet ist.

7. System nach Anspruch 5, wobei die Wand (570) von flacher Form ist und die Rotoren in einer axialen Anordnung auf beiden Seiten der Wand (570) angeordnet sind.

8. System nach Anspruch 5 oder Anspruch 6, wobei einer der Rotoren ein Schwungrad (704) bildet.

9. System nach Anspruch 8, wobei das Schwungrad (704) angeordnet ist, um durch das andere Element angetrieben zu werden, um Energie in das Schwungrad (704) einzubringen, und um das andere Element anzutreiben, um Energie aus dem Schwungrad (704) zu entnehmen.

10. System nach einem der Ansprüche 1 bis 4, wobei das Antriebselement (602) angeordnet ist, um das angetriebene Element (604) linear anzutreiben

## Revendications

1. Système à entraînement forcé magnétique comprenant un logement (350, 450) délimitant une chambre (352) fermée hermétiquement, un élément menant (302, 402) comprenant un premier jeu d'aimants permanents (410), et un élément mené (304, 404) comprenant un second jeu d'aimants permanents (314, 414), l'un des éléments (302, 304, 402, 404) étant situé à l'intérieur de la chambre (352),
dans lequel les premier (410) et second (314, 414) jeux d'aimants sont agencés pour produire des nombres différents de pôles magnétiques, et le logement (350, 450) comprend une paroi (370, 470) s'étendant entre les éléments (302, 304, 402, 404) et soutenant une pluralité de pièces polaires (306, 406) qui sont agencées pour moduler le champ magnétique agissant entre les aimants,
**caractérisé en ce que** les pièces polaires (306, 406) sont situées au-dessous de la surface (380) de la paroi tournée à l'opposé de la chambre et au-dessous de la surface (382) de la paroi tournée vers la chambre de telle sorte que les pièces polaires sont à la fois isolées hermétiquement de la chambre (352) et noyées dans la paroi (370, 470).

2. Système selon la revendication 1, dans lequel l'élément mené (304, 404) est situé à l'intérieur de la chambre (352).

3. Système selon la revendication 1 ou 2, dans lequel l'espacement des pôles magnétiques du premier jeu d'aimants (410) est supérieur à l'espacement des pôles magnétiques du second jeu (314, 414) de telle sorte que l'élément mené (304, 404) est entraîné à une vitesse plus lente que celle de l'élément menant (302, 402).

4. Système selon la revendication 1 ou 2, dans lequel l'espacement des pôles magnétiques du premier jeu d'aimants (410) est inférieur à l'espacement des pôles magnétiques du second jeu (314, 414) de telle sorte que l'élément mené (304, 404) est entraîné à une vitesse supérieure à celle de l'élément menant (302, 402).

5. Système selon l'une quelconque des revendications précédentes, dans lequel les éléments (302, 304, 402, 404) sont des rotors.

6. Système selon la revendication 5, dans lequel la paroi (370, 470) est de forme cylindrique et un des rotors est disposé radialement à l'intérieur de la paroi (370, 470) et l'autre rotor est disposé radialement à l'extérieur de la paroi (370, 470).

7. Système selon la revendication 5, dans lequel la paroi (570) est de forme plate et les rotors sont disposés selon un agencement axial de part et d'autre de la paroi (570).

8. Système selon la revendication 5 ou 6, dans lequel un des rotors constitue un volant d'inertie (704) .

9. Système selon la revendication 8, dans lequel le volant (704) est agencé pour être entraîné par l'autre élément afin que celui-ci amène de l'énergie au volant (704), et pour entraîner l'autre élément afin que celui-ci récupère l'énergie du volant (704).

10. Système selon l'une quelconque des revendications 1 à 4, dans lequel l'élément menant (602) est agencé pour entraîner linéairement l'élément mené (604).
